# EUROPEAN PATENT SPECIFICATION

(11) **EP 2 122 894 B1**
(45) Date of publication and mention of the grant of the patent: **05.06.2019**
(21) Application number: 08753184.4
(22) Date of filing: 25.04.2008
(51) Int. Cl.: H04L 1/16, H04L 1/00, H04L 1/06

(54) **METHOD FOR TRANSMITTING UPLINK CONTROL INFORMATION IN MULTIPLE-INPUT MULTIPLE-OUTPUT SYSTEM**
VERFAHREN ZUM SENDEN VON UPLINKSTEUERUNGSINFORMATIONEN IN EINEM MIMO-SYSTEM
PROCÉDÉ DE TRANSMISSION D'INFORMATION DE COMMANDE DE LIAISON MONTANTE DANS UN SYSTÈME À MULTIPLES ENTRÉES, MULTIPLES SORTIES

(30) Priority: 25.04.2007 US 913973 P; 23.10.2007 KR 20070106559
(43) Date of publication of application: 25.11.2009
(73) Proprietor: LG Electronics Inc., Seoul 07336 (KR)
(72) Inventor: LEE, Moon Il, Anyang-si Gyeonggi-do 431-080 (KR); IHM, Bin Chul, Anyang-si Gyeonggi-do 431-080 (KR); KO, Hyun Soo, Anyang-si Gyeonggi-do 431-080 (KR); CHUN, Jin Young, Anyang-si Gyeonggi-do 431-080 (KR); LEE, Wook Bong, Anyang-si Gyeonggi-do 431-080 (KR)
(74) Representative: Cabinet Plasseraud
(86) International application number: PCT/KR2008/002364
(87) International publication number: WO 2008/133448

(56) References cited:
- EP-A1- 1 458 118
- EP-A2- 1 770 889
- WO-A1-03/010984
- US-A1- 2003 129 989
- US-A1- 2006 285 522
- HUAWEI: "Baseline uplink CQI message - content and size", 3GPP DRAFT; R1-061820, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Cannes, France; 20060620, 20 June 2006 (2006-06-20), XP050111637, [retrieved on 2006-06-20]

## Description

### Technical Field

The present invention relates to uplink control information and more particularly, to a method for transmitting uplink control information in a Multiple-Input Multiple-Output (MIMO) system.

### Background Art

Recently, demand for wireless communication services has been rapidly increased due to the spread of information communication services, introduction of various multimedia services, and implementation of high-quality services. To meet such demand, it is necessary to increase the capacity of communication systems. Methods, which can be considered to increase communication capacity in wireless communication environments, include a method of finding a new available frequency band and a method of increasing the efficiency of frequency resources.

Recently, as the latter method, a multiple-antenna communication technology has attracted much attention and has been actively developed. In the multiple-antenna communication technology, multiple antennas are installed in a transmitter/receiver to secure an additional spatial region for use of resources, thereby obtaining diversity gain, or data are transmitted in parallel through the antennas to increase transmission capacity.

One example of the multiple antenna technology is Multiple-Input Multiple-Output (MIMO). A MIMO system, which has multiple inputs/outputs, transmits different information through each transmit antenna to increase the amount of transmitted information, and uses a coding technique such as Space-Time Coding (STC) to increase reliability of transmitted information.

When the MIMO system has N_{T} transmit antennas and N_{R} receive antennas, the N_{T} transmit antennas transmit independent symbols through the same frequency at the same time. Although the transmitted symbols undergo spatially different fading while passing through wireless channels, the receiving side can identify the symbols since the symbols have different spatial properties. This MIMO system enables efficient data transmission in combination with Orthogonal Frequency Division Multiplexing (OFDM).

In addition to MIMO, link control techniques such as Adaptive Modulation & Coding (AMC), Hybrid Automatic Request (HARQ), and power control can be used to achieve efficient data transmission. AMC is a channel adaptive transmission technique in which a base station determines a modulation method and a coding rate based on feedback information received from terminals and controls data rates according to the determination.

For example, according to the AMC technique, if the base station determines a Modulation and Coding Set (MCS) based on CQI fed back from a terminal and transmits the MCS to the terminal, then the terminal transmits data using a modulation method and a coding method specified in the MCS.

U.S. patent application publication No. 2003/0129989 A1 describes a mobile station transmitter transmitting channel quality indicator data which has been punctured with null CQI data, to a base station.

According to techniques such as AMC which increases system performance through feedback, the performance is maximized when feedback information such as channel status and user velocity is received from the receiving side each time data is transmitted. However, transmitting feedback information each time data is transmitted causes a problem of excessive overhead in a feedback channel.

Especially, in a multiple antenna system which uses multiple codewords (MCW), the same number of CQIs as the number of multiple codewords must be fed back in order to increase system performance since a different MCS can be set in each of the codewords. However, this causes a problem of excessive load on the feedback channel as described above.

### Disclosure of Invention

### Technical Problem

An object of the present invention devised to solve the problem lies in providing a method for transmitting uplink control information including feedback information in a MIMO system.

Another object of the present invention devised to solve the problem lies in providing a method for reducing feedback overhead when transmitting uplink control information.

### Technical Solution

Although the amount of uplink control information is generally proportional to the efficiency of data transmission as described above, appropriate tradeoff should be made between the amount of uplink control information and the efficiency of data transmission since the amount of uplink control information cannot be increased indefinitely when limited feedback channel resources are taken into consideration. The embodiments of the invention described below provide methods for reducing the number of uplink control information bits.

The objects of the present invention can be achieved by providing a method for transmitting uplink control information in a Multiple-Input Multiple- Output (MIMO) system as set forth in the appended claims.

### Advantageous Effects

The method for transmitting uplink control information in a MIMO system according to the invention can transmit uplink control information with reduced feedback overhead. The method does not significantly reduce communication performance even though the feedback overhead is reduced. The method can also transmit various other feedback information elements together with the Channel Quality Information.

### Brief Description of the Drawings

The accompanying drawings, which are included to provide a further understanding of the invention, illustrate embodiments of the invention and together with the description serve to explain the principle of the invention.

In the drawings:
FIG. 1 illustrates relative transmission periods of a plurality of feedback information that are transmitted according to an embodiment of the invention;
FIG. 2 illustrates a method for transmitting a plurality of feedback information according to an embodiment of the invention;
FIG. 3 illustrates relative transmission periods of a plurality of feedback information that are transmitted according to an embodiment of the invention;
FIG. 4 illustrates an example method for transmitting Channel Quality Information (CQI);
FIG. 5 illustrates a method for transmitting a plurality of feedback information according to an embodiment of the invention;
FIG. 6 illustrates a method for transmitting a plurality of feedback information according to an embodiment of the invention;
FIG. 7 illustrates a method for transmitting CQI according to an embodiment of the invention;
FIG. 8 illustrates a method for transmitting a plurality of feedback information according to another embodiment of the invention;
FIG. 9 illustrates a method for transmitting a plurality of feedback information according to another embodiment of the invention; and
FIG. 10 illustrates a method for transmitting a plurality of feedback information according to another embodiment of the invention.

### Mode for the Invention

Reference will now be made in detail to the preferred embodiments of the present invention, examples of which are illustrated in the accompanying drawings.

Feedback information transmitted for uplink control information in a general Multiple-Input Multiple-Output (MIMO) system may include Channel Quality Information (CQI), a Precoding Matrix Information or Index (PMI), a Rank Information or Index (RI), and a Mode Information or Index (MI). The MI indicates whether an open-loop mode or a closed-loop mode is applied to the system.

As described above, as the amount of uplink control information transmitted increases, the data transfer rate decreases although system performance increases. Thus, it is necessary to maintain the amount of uplink control information transmitted at an appropriate level. Accordingly, not all feedback information elements are transmitted at intervals of the same transmission period. That is, the transmission period is determined taking into consideration the possibility of change and the probability of use and application of each feedback information, etc.

In the following description, it is assumed that the transmission periods of the CQI, PMI, RI, and MI increase sequentially.

In the following description of the invention, it is also assumed that, when a plurality of feedback information elements are transmitted, the transmission period of each feedback information element, other than the smallest of the transmission periods of the feedback information elements, is a multiple of the smallest transmission period. The transmission period of each feedback information element can be determined to have at least one Transmission Time Interval (TTI).

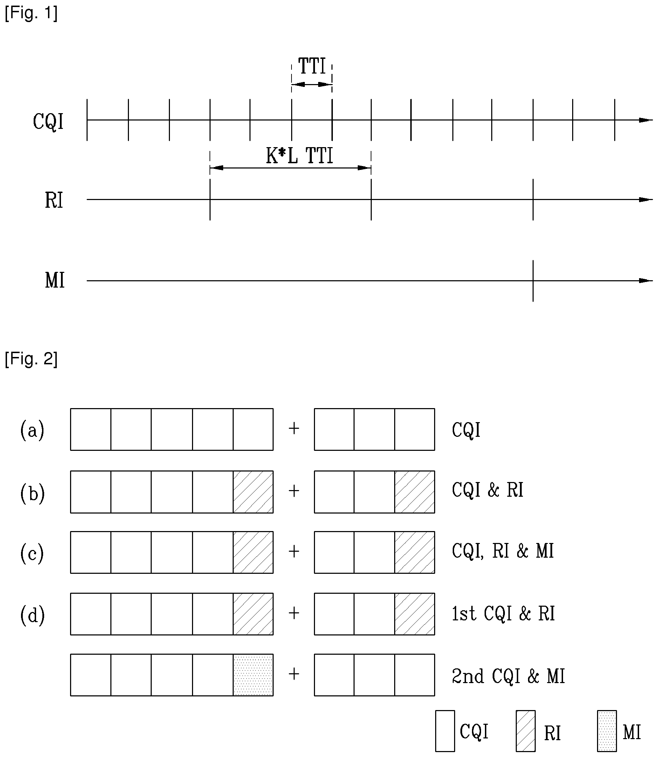

FIG. 1 illustrates relative transmission periods of a plurality of feedback information (or feedback information elements) that are transmitted according to an embodiment of the invention.

Specifically, FIG. 1 shows respective transmission periods of the CQI, RI, and MI that are transmitted as feedback information elements in an open-loop system. A first line of FIG. 1 shows CQI that is transmitted at intervals of a transmission period of L TTIs. A second line of FIG. 1 shows RI that is transmitted at intervals of a transmission period of K×L TTIs. A third line of FIG. 1 shows MI that is transmitted at intervals of a transmission period that is determined to be a multiple of the transmission period of the CQI greater than the transmission period of the RI as assumed above although not clearly shown in the figure.

FIG. 2 illustrates a method for transmitting a plurality of feedback information elements according to an embodiment of the invention.

A method for transmitting CQI together with other feedback information (or feedback information elements) using information bits allocated to transmit CQI according to an embodiment in the case where a plurality of feedback information elements are transmitted at intervals of respective transmission periods as shown in FIG. 1 in an open-loop system will now be described with reference to FIGs. 2(a) to 2(d).

First, an example method of transmitting CQI in an open-loop system is described. Here, it is assumed that two codewords are transmitted. In the open-loop system, CQI of a wide band is transmitted as feedback information using at least one CQI channel.

The CQI channel can consist of at least one bit. For example, One CQI channel may consist of 5 or 8 bits. In the case where a CQI channel of 8 bits is used, a CQI channel including full CQI of 5 bits and differential CQI of 3 bits can be fed back.

The full CQI of 5 bits and the different CQI of 3 bits are arbitrarily defined in the system. For example, when two codewords are transmitted as assumed above, two CQI are simultaneously transmitted in one frequency band. full CQI of 5 bits and differential CQI of 3 bits can be defined as information carrying respective channel states of the two codewords. Differential CQI of 3 bits can be determined to be a difference from full CQI of 5 bits.

In the following description, it is assumed that a single CQI channel including full CQI of 5 bits and differential CQI of 3 bits is transmitted.

FIG. 2(a) illustrates an example configuration of a single CQI channel that is transmitted at the time when CQI alone is transmitted. Since two codewords are transmitted as described above, a single CQI channel includes 5-bit CQI including channel information of the first codeword and 3-bit CQI including a differential value indicating channel information of the second codeword.

FIG. 2(b) illustrates an example configuration of a single CQI channel that is transmitted at the time when not only the CQI but also the RI are transmitted. 8 bits transmitting the single CQI are partially punctured to transmit RI according to this embodiment.

When information is transmitted using multiple bits, for example when information is transmitted using n bits, a bit corresponding to a position of 2ⁿ⁻¹ is defined as a Most Significant Bit (MSB) and a bit corresponding to a position of 2⁰ is defined as a Least Significant Bit (LSB). The influence of an error occurring in information varies depending on a bit position of the information at which the error occurred. The influence of an error occurring at a bit decreases as the significance of the bit decreases. Accordingly, it is preferable that more important information be transmitted using a more significant bit. In the case where the 8 bits transmitting a single CQI channel are partially punctured according to this embodiment, they may be punctured in order of increasing bit significance, the Least Significant Bit (LSB) first.

The number of cases of the RI is determined according to the number of transmit/ receive antennas and the number of bits required to transmit the RI is determined according to the number of cases. For example, when the number of antennas is 2, the highest rank is 2 and two cases (i.e., rank 1 and rank 2) are possible for the RI. Accordingly, one bit is sufficient to transmit RI when the number of antennas is 2. When the number of antennas is 4, the highest rank is 4 and four cases of rank 1, rank 2, rank 3, and rank 4 may occur. Accordingly, two bits are required to transmit RI when the number of antennas is 4.

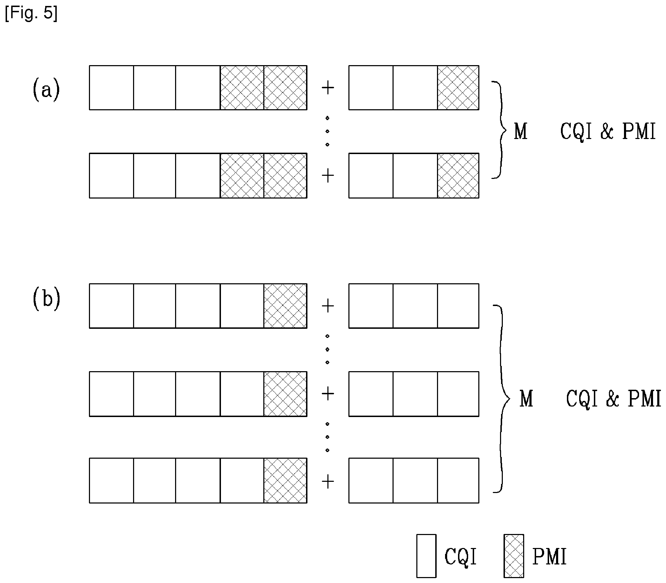

In the example of FIG. 2(b), 5-bit CQI and 3-bit CQI are punctured at their two LSBs (i.e., the LSB of the 5-bit CQI and the LSB of the 3-bit CQI) to transmit RI when two bits are required to transmit the RI.

FIG. 2(c) illustrates an example configuration of a single CQI channel that is transmitted at the time when not only the CQI and RI but also MI are transmitted. 8 bits transmitting the single CQI are partially punctured to transmit RI and MI according to this embodiment. One bit is sufficient to transmit the MI since two cases (i.e., open-loop and closed-loop) are present for the MI. In the example of FIG. 2(c), 5-bit CQI and 3-bit CQI are punctured at their two LSBs to transmit 2-bit RI and the 5-bit CQI is punctured at its second least significant bit to transmit 1-bit MI.

FIG. 2(d) illustrates another example configuration of a single CQI channel that is transmitted at the time when not only the CQI and RI but also MI are transmitted. 8 bits transmitting the single CQI are partially punctured to transmit RI and MI according to this embodiment, while the RI and MI are transmitted through different CQI channels.

If one CQI channel is overly punctured, there is a high likelihood that an error will occur in CQI transmission. Accordingly, if different CQI channels are punctured as little as possible at their respective LSBs according to this embodiment, it is possible to reduce control channel overhead without significantly increasing the likelihood of errors in the CQI channels.

In the example of FIG. 2(d), 5-bit CQI and 3-bit CQI in a first CQI channel are punctured at their respective LSBs to transmit 2-bit RI and 5-bit CQI in a second channel is punctured at its LSB to transmit 1-bit MI.

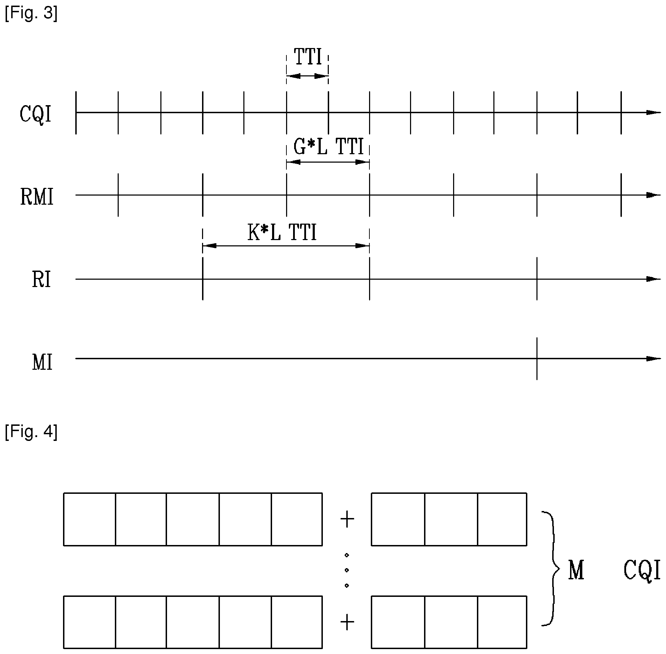

FIG. 3 illustrates relative transmission periods of a plurality of feedback information that are transmitted according to an embodiment of the invention.

Specifically, FIG. 3 shows respective transmission periods of CQI, PMI, RI, and MI that are transmitted as feedback information elements in a closed-loop system. Especially, in this system, a precoding technique is applied so that precoding information is fed back. A first line of FIG. 3 shows CQI that is transmitted at intervals of a transmission period of L TTIs. A second line of FIG. 3 shows Precoding Matrix Information (PMI) that is transmitted at intervals of a transmission period of GxL TTIs. A third line of FIG. 3 shows RI that is transmitted at intervals of a transmission period of KxL TTIs. A fourth line of FIG. 3 shows MI that is transmitted at intervals of a transmission period that is determined to be a multiple of the transmission period of the CQI greater than the transmission period of the RI as assumed above although not clearly shown in the figure.

FIG. 4 illustrates an example method for transmitting Channel Quality Information (CQI).

In a closed-loop system, a CQI channel is transmitted not for a wide band but for each of some selected sub-bands among the sub-bands of the wide band. Specifically, CQI can be transmitted for each of M sub-bands that are selected, in order of decreasing channel quality starting from a sub-band with the highest channel quality, from the sub-bands of the wide band. Inhere, M, which is the number of CQI transmitted, can be same or less than the number of the sub-bands of the wide band.

Here, it is assumed that two codewords are transmitted and channel information of the two codewords are transmitted respectively in 5-bit CQI and 3-bit CQI through each CQI channel as in the examples of FIGs. 2(a) to 2(d).

In the example of FIG. 4, M CQI channels, each including 5-bit CQI and 3-bit CQI, are transmitted. That is, the wide band is divided into multiple sub-bands, and channel information of M sub-bands with excellent channel characteristics among the multiple sub-bands are transmitted through the M CQI channels, respectively.

FIG. 5 illustrates a method for transmitting a plurality of feedback information according to an embodiment of the invention.

A method for transmitting CQI together with other feedback information (particularly, PMI) using information bits allocated to transmit CQI according to an embodiment in the case where a plurality of feedback information elements are transmitted at intervals of respective transmission periods as shown in FIG. 3 in a closed-loop system in which precoding information is fed back will now be described with reference to FIGs. 5(a) and 5(b).

Specifically, FIGs. 5(a) and 5(b) show example configurations of M CQI channels, corresponding to the selected M sub-bands, transmitted when not only CQI but also PMI are transmitted. According to this embodiment, 8 bits transmitting single CQI are partially punctured to transmit PMI according to this embodiment. In the case where the 8 bits transmitting a single CQI channel are partially punctured according to this embodiment, they are punctured in order of increasing bit significance, the Least Significant Bit (LSB) first. Although the number of bits required to transmit PMI is arbitrarily defined in the system, 3 or 4 bits are generally allocated to PMI. In this embodiment, it is assumed that 3-bit PMI is transmitted.

More specifically, FIG. 5(a) shows example configurations of M CQI channels where respective optimal precoding information (i.e., M PMIs) of M sub-bands carrying the M CQI channels are transmitted through the M CQI channels. In this case, each CQI channel is punctured at its LSB(s) to transmit PMI of a sub-band corresponding to the CQI channel. That is, 5-bit CQI is punctured at its two LSBs and 3-bit CQI is punctured at the LSB to transmit PMI.

On the other hand, FIG. 5(b) shows example configurations of M CQI channels where precoding information (i.e., single PMI) determined based on the wide band, rather than the respective M PMIs of M sub-bands carrying the M CQI channels, is transmitted through the M CQI channels. In this case, some CQI channels are selected from the M CQI channels and each of the selected CQI channels is punctured at its LSB to transmit single PMI. More specifically, as shown in FIG. 5(b), three CQI channels are selected from the M CQI channels and 5-bit CQI in each of the selected CQI channels is punctured at its LSB to transmit single PMI of 3 bits.

In another example where 4-bit PMI is transmitted, 8 bits transmitting each CQI channel may also be punctured in order of increasing bit significance, the LSB first, to transmit the PMI in the same manner as the above embodiment. For example, in the case where respective optimal precoding information (i.e., M PMIs) of M sub-bands carrying the M CQI channels are transmitted through the M CQI channels, each of the CQI channels is punctured at its LSB to transmit PMI of a sub-band corresponding to the CQI channel. That is, 5-bit CQI may be punctured at its three LSBs and 3-bit CQI may be punctured at the LSB to transmit PMI of 4 bits. Alternatively, 5-bit CQI may be punctured at its two LSBs and 3-bit CQI may be punctured at its two LSBs to transmit PMI of 4 bits.

Alternatively, when precoding information (i.e., single PMI) determined based on the wide band, rather than the respective M PMIs of M sub-bands carrying the M CQI channels, is transmitted through the M CQI channels in the same manner as the example of FIG. 5(b), some CQI channels are selected from the M CQI channels and each of the selected CQI channels is punctured at its LSB to transmit single PMI. More specifically, four CQI channels can be selected from the M CQI channels and 5-bit CQI in each of the selected CQI channels can be punctured at its LSB to transmit single PMI of 4 bits.

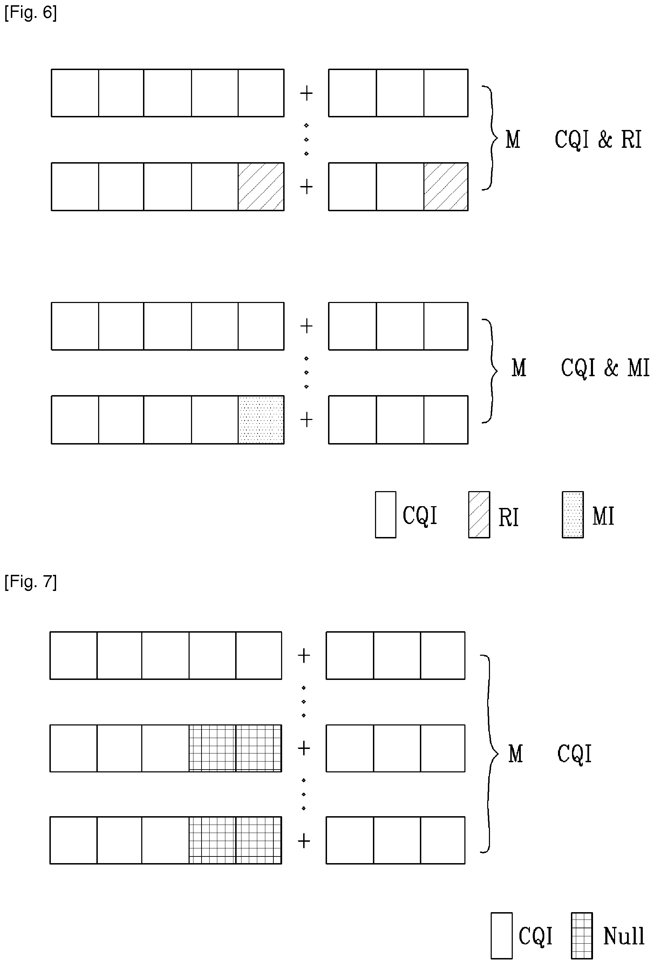

FIG. 6 illustrates a method for transmitting a plurality of feedback information according to an embodiment of the invention.

A method for transmitting CQI together with other feedback information (particularly, RI or MI) using information bits allocated to transmit CQI according to an embodiment in the case where a plurality of feedback information elements are transmitted at intervals of respective transmission periods as shown in FIG. 3 in a closed-loop system in which precoding information is fed back will now be described with reference to FIGs. 6(a) and 5(b).

FIG. 6(a) shows example configurations of M CQI channels, corresponding to the selected M sub-bands, transmitted when not only CQI but also RI are transmitted. According to this embodiment, 8 bits transmitting single CQI are partially punctured to transmit RI according to this embodiment. In the case where the 8 bits transmitting a single CQI channel are partially punctured according to this embodiment, they are punctured in order of increasing bit significance, the LSB first. Specifically, 5-bit CQI in a single CQI channel among the M CQI channels is punctured at its LSB and 5-bit CQI in the single CQI channel is punctured at its LSB to transmit 2-bit RI as shown in FIG. 6(a).

Although transmission of PMI illustrated in FIGs. 5(a) and 5(b) is not illustrated in FIG. 6(a), CQI, PMI, and RI may be transmitted at the same time. In this case, some CQI channels are selected from the M CQI channels and each of the selected CQI channels is punctured to transmit at least one of the PMI and RI.

In the case where M PMIs are transmitted respectively through M CQI channels as described above in the example of FIG. 5(a), some of the channels may be additionally punctured to transmit RI. In the case where single PMI is transmitted through some of the M CQI channels as described above in the example of FIG. 5(b), some CQI channels can be selected from CQI channels which do not carry the PMI, and RI can be transmitted through the selected CQI channels.

FIG. 6(b) shows example configurations of M CQI channels, corresponding to the selected M sub-bands, transmitted when not only CQI but also MI are transmitted. According to this embodiment, 8 bits transmitting single CQI are partially punctured to transmit MI according to this embodiment. In the case where the 8 bits transmitting a single CQI channel are partially punctured according to this embodiment, they are punctured in order of increasing bit significance, the LSB first.

Specifically, 5-bit CQI in a single CQI channel among the M CQI channels is punctured at its LSB to transmit 1-bit MI as shown in FIG. 6(b).

Although transmission of PMI illustrated in FIGs. 5(a) and 5(b) and transmission of RI illustrated in FIG. 6(a) is not illustrated in FIG. 6(b), CQI, PMI, RI, and MI may be transmitted at the same time. In this case, some CQI channels are selected from the M CQI channels and each of the selected CQI channels is punctured to transmit at least one of the PMI, RI, and MI. Here, we omit a more detailed description of this method since it is similar to the description of FIG. 6(a).

FIG. 7 illustrates a method for transmitting Channel Quality Information (CQI) according to an embodiment of the invention.

In a closed-loop system, a CQI channel is transmitted not for a wide band but for each of some selected sub-bands among the sub-bands of the wide band. Specifically, CQI can be transmitted for each of M sub-bands that are selected, in order of decreasing channel quality starting from a sub-band with the highest channel quality, from the sub-bands of the wide band.

In this embodiment, it is assumed that two codewords are transmitted and a single CQI channel consists of 8 bits as in the examples of FIGs. 2(a) to 2(d). In this embodiment, channel information of the two codewords are transmitted respectively in 5-bit CQI and 3-bit CQI, only through a CQI channel corresponding to a sub-band exhibiting the highest channel performance, unlike the example of FIG. 4. Each of the M-1 CQI channels corresponding respectively to the remaining M-1 sub-bands transmits a difference from the CQI channel information of the sub-band exhibiting the highest channel performance.

In the example of FIG. 7, M CQI channels, each including 5-bit CQI and 3-bit CQI, are transmitted. That is, the wide band is divided into multiple sub-bands, and channel information of one sub-band with the best channel characteristics among the multiple sub-bands is transmitted through one of the M CQI channels. The remaining M-1 CQI channels transmit channel information of other M-1 sub-bands with excellent channel characteristics, respectively, while each of the M-1 CQI channels transmits differential CQI of 3 bits for each of the first and second codewords. Reference CQI used to generate the differential CQI may be CQI of the sub-band with the best channel characteristics described above.

2 null bits may be generated in each of the M-1 CQI channels since 3-bit differential CQI is transmitted as each codeword CQI in the M-1 CQI channels as described above.

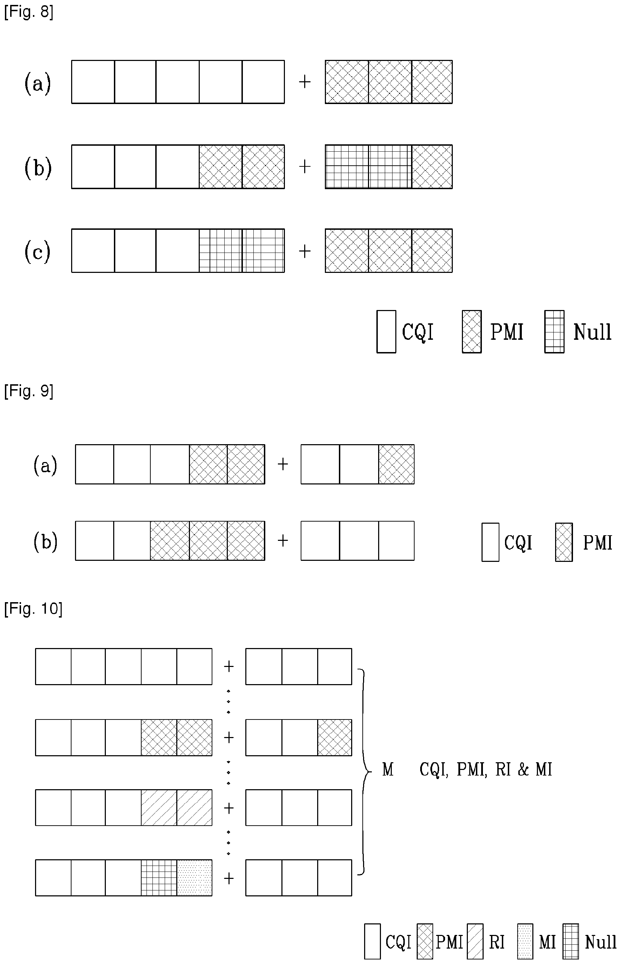

FIG. 8 illustrates a method for transmitting a plurality of feedback information according to another embodiment of the invention.

A method for transmitting CQI together with other feedback information (particularly, PMI) using information bits allocated to transmit CQI according to an embodiment in the case where a plurality of feedback information elements are transmitted at intervals of respective transmission periods as shown in FIG. 3 in a closed-loop system in which precoding information is fed back will now be described with reference to FIGs. 8(a), 8(b), and 8(c).

This embodiment is applied particularly to the case of rank 1. In the case of rank 1, it is only necessary to transmit CQI of a single codeword since a plurality of codewords are not transmitted at the same time. Thus, when it is assumed that a CQI channel consists of 8 bits, the CQI channel will include null bits carrying no channel information in the case of rank 1. Accordingly, in this case, PMI is transmitted through the null bits according to this embodiment.

In the example of FIG. 8, although an 8-bit CQI channel including 5-bit CQI and 3-bit CQI is transmitted, the 3-bit differential CQI is not transmitted since the rank is 1 as described above.

FIG. 8(a) illustrates a method in which respective 5-bit CQI of M selected sub-bands are transmitted through M CQI channels, respectively, and PMI is transmitted through 3 bits of each of the M CQI channels which originally transmit differential CQI of the second codeword.

FIGs. 8(b) and 8(c) show methods for transmitting PMI when the CQI transmission method described above with reference to FIG. 7 is applied. Each of M-1 CQI channels, other than a CQI channel corresponding to a sub-band exhibiting the best channel performance, may include a total of 5 null bits since each of the M-1 CQI channels transmits 3-bit differential CQI which indicates a difference from a CQI value of the sub-band exhibiting the best channel performance.

In the method of FIG. 8(b), PMI is transmitted using null bits of a CQI channel, through which 3-bit differential CQI is transmitted, wherein the PMI is transmitted using the two LSBs of 5-bit CQI and the LSB of 3-bit CQI. In the method of FIG. 8(c), PMI is transmitted using null bits of a CQI channel, through which 3-bit differential CQI is transmitted, wherein the PMI is transmitted using 3 bits that are originally allocated to 3-bit CQI.

FIG. 9 illustrates a method for transmitting a plurality of feedback information according to another embodiment of the invention.

A method for transmitting CQI together with other feedback information (particularly, PMI) using information bits allocated to transmit CQI according to an embodiment in the case where a plurality of feedback information elements are transmitted at intervals of respective transmission periods as shown in FIG. 3 in a closed-loop system in which precoding information is fed back will now be described with reference to FIGs. 9(a) and 9(b).

This embodiment is applied to the case of rank 2 or higher, particularly the case of rank 2. FIGs. 9(a) and 9(b) show methods for transmitting PMI when the CQI transmission method described above with reference to FIG. 7 is applied. Each of M-1 CQI channels, other than a CQI channel corresponding to a sub-band exhibiting the best channel performance, may include a total of 2 null bits since each of the M-1 CQI channels transmits 3-bit differential CQI which indicates a difference from a CQI value of the sub-band exhibiting the best channel performance. Even when the 2 null bits are used, one more bit is needed if a total of 3 bits are required to transmit PMI.

In this case, as in FIG. 7, 3-bit differential CQI is transmitted for the first codeword in each of the M-1 CQI channels, other than a CQI channel corresponding to a sub-band exhibiting the best channel performance, according to this embodiment. In addition, 2-bit differential CQI is transmitted for the second codeword, thereby obtaining one null bit. A total of 3 null bits obtained in this manner are used to transmit 3-bit PMI.

According to the PMI transmission method shown in FIG. 9(a), differential CQI is transmitted for the first codeword through 3 MSBs of the 5-bit CQI, and differential CQI is transmitted for the second codeword through 2 MSBs of the 3-bit CQI. In addition, PMI is transmitted through 2 null bits in the 5-bit CQI and 1 null bit in the 3-bit CQI.

According to the PMI transmission method shown in FIG. 9(b), differential CQI is transmitted for the first codeword through the 3-bit CQI, and differential CQI is transmitted for the second codeword through 2 MSBs of the 5-bit CQI. In addition, PMI is transmitted through 3 null bits in the 5-bit CQI.

FIG. 10 illustrates a method for transmitting a plurality of feedback information according to another embodiment of the invention.

A method for transmitting CQI together with other feedback information including PMI, RI, and MI using information bits allocated to transmit CQI according to an embodiment in the case where a plurality of feedback information elements are transmitted at intervals of respective transmission periods as shown in FIG. 3 in a closed-loop system in which precoding information is fed back will now be described with reference to FIG. 10. In this embodiment, it is also assumed that two codewords are transmitted.

In a closed-loop system, a CQI channel is transmitted not for a wide band but for each of some selected sub-bands among the sub-bands of the wide band. Specifically, CQI can be transmitted for each of M sub-bands that are selected, in order of decreasing channel quality starting from a sub-band with the highest channel quality, from the sub-bands of the wide band.

In the example illustrated in FIG. 10, the method described above with reference to FIG. 7 is used as a method for transmitting CQI. That is, 5-bit CQI and 3-bit CQI are transmitted as channel information of the sub-band exhibiting the best performance, whereas 3-bit differential CQI, which indicates a difference from channel information of the sub-band exhibiting the best performance, and another 2-bit or 3-bit differential CQI are transmitted for each of the remaining M-1 sub-bands. As a result, each of the M-1 CQI channels includes at least two null bits.

Null bits of each of the M-1 CQI channels can be used to transmit PMI together with CQI. In order to transmit PMI for each sub-band, i.e., in order to transmit a total of M PMIs, it is necessary to perform additional puncturing. It is preferable that puncturing be performed at the LSB as described above.

FIG. 10 illustrates an example where single PMI is transmitted through the M-1 CQI channels. Specifically, PMI can be transmitted using null bits included in any one of the M-1 CQI channels. When the number of the null bits is less than the number of bits required to transmit PMI, the PMI can be transmitted using another CQI channel or can be transmitted by additionally puncturing the same CQI channel at the LSB.

In the case where RI is transmitted together with CQI and PMI, null bits, in which PMI is not transmitted, among null bits in each of the M-1 CQI channels can be used to transmit the RI. In the case where PMI is transmitted for each sub-band, it will be necessary to perform additional puncturing to transmit RI. It is preferable that a CQI channel with the worst channel performance among those of the selected M sub-bands be punctured and that the CQI channel be punctured at the LSB as described above.

FIG. 10 also illustrates an example where RI is transmitted together with single PMI that is transmitted through the M-1 CQI channels. In this case, RI is transmitted using null bits included in any one of CQI channels, through which none of PMI and MI is transmitted, among the M-1 CQI channels through which only differential CQI is transmitted.

Finally, in the case where MI is transmitted together with CQI, PMI, and RI, null bits, in which PMI is not transmitted, among null bits in each of the M-I CQI channels can also be used to transmit the MI. In the case where PMI is transmitted for each sub- band, it will be necessary to perform additional puncturing to transmit MI. It is preferable that a CQI channel with the worst channel performance among those of the selected M sub-bands be punctured and that the CQI channel be punctured at the LSB as described above.

FIG. 10 also illustrates an example where RI and MI are transmitted together with single PMI that is transmitted through the M-I CQI channels. In this case, MI is transmitted using null bits included in any one of CQI channels, through which none of PMI and RI is transmitted, among the M- 1 CQI channels through which only differential CQI is transmitted.

The CQI channel can consist of at least one bit. For example, in above description, it is described that one CQI channel may consist of 5 or 8 bits and in the case where a CQI channel of 8 bits is used, a CQI channel including full CQI of 5 bits and differential CQI of 3 bits can be fed back. But, it is sure that the number of bits consisting the CQI channel, full CQI or differential CQI can be determined according to various methods.

It will be apparent that claims which are not explicitly dependent on each other can be combined to provide an embodiment or new claims can be added through amendment after this application is filed.

Those skilled in the art will appreciate that the present invention may be carried out in other specific ways than those set forth herein without departing from the essential characteristics of the present invention in accordance with the appended claims. The above embodiments are therefore to be construed in all aspects as illustrative and not restrictive.

The scope of the invention should be determined by the appended claims, not by the above description, and all changes coming within the meaning and equivalency range of the appended claims are intended to be embraced therein.

### Industrial Applicability

The present invention relates to a method for transmitting uplink control information. The present invention is applicable to a mobile communication system, a cellular mobile communication system, a cellular multiplexing carrier system and a Multiple- Input Multiple-Output (MIMO) system.

## Claims

1. A method for transmitting uplink control information in a Multiple-Input Multiple-Output, MIMO, system, the method comprising:
transmitting M channel quality information, CQI, channels, each including CQI;
wherein additional feedback information is included in at least one punctured bit in a plurality of bits allocated for the M CQI channels,
wherein:
each of the M CQI channels is associated with channel quality of at least one selected sub-band,
the method **characterized in that**:
the M CQI channels are transmitted for best M sub-bands in a plurality of sub-bands being comprised in a wideband.

2. The method according to claim 1, wherein: the additional feedback information includes at least one of a Precoding Matrix Information, PMI, a Rank Indication, RI, and a Mode Indication, MI.

3. The method according to claim 1, wherein: the at least one punctured bit includes a Least Significant Bit, LSB, of the plurality of bits.

4. The method according to claim 1, wherein: the at least one CQI includes at least one of full CQI and differential CQI.

5. The method according to claim 4, wherein: if at least two codewords are transmitted, the full CQI is associated with a first codeword and the differential CQI is associated with a second codeword.

6. The method according to claim 1, wherein the best M sub-bands correspond to M sub-bands having best channel quality in the plurality of sub-bands.

## Patentansprüche

1. Verfahren zur Übertragung von Aufwärtsverbindungssteuerinformationen in einem Mehrfacheingangs-Mehrfachausgangs-, MIMO-System, wobei das Verfahren aufweist:
Übertragen von M Kanalqualitätsinformations-, CQI-, Kanälen, die jeweils eine CQI enthalten;
wobei zusätzliche Rückkopplungsinformationen in wenigstens einem punktierten Bit in mehreren Bits, die für die M CQI-Kanäle zugewiesen sind, enthalten sind,
wobei:
zu jedem der M CQI-Kanäle eine Kanalqualität wenigstens eines ausgewählten Subbands gehört,
wobei das Verfahren **dadurch gekennzeichnet ist, dass**:
die M CQI-Kanäle für die besten M Subbänder in mehreren Subbändern, die in einem Breitband enthalten sind, übertragen werden.

2. Verfahren nach Anspruch 1, wobei: die zusätzlichen Rückkopplungsinformationen eine Vorcodiermatrixinformation, PMI, und/oder eine Ranganzeige, RI, und/oder eine Modusanzeige, MI, umfassen.

3. Verfahren nach Anspruch 1, wobei: das wenigstens eine punktierte Bit ein niederwertigstes Bit, LSB, der mehreren Bits umfasst.

4. Verfahren nach Anspruch 1, wobei: die wenigstens eine CQI eine vollständige CQI und/oder eine differentielle CQI umfasst.

5. Verfahren nach Anspruch 4, wobei: wenn wenigstens zwei Codewörter übertragen werden, die vollständige CQI mit einem ersten Codewort verbunden wird und die differentielle CQI mit einem zweiten Codewort verbunden wird.

6. Verfahren nach Anspruch 1, wobei die besten M Subbänder M Subbändern mit der besten Kanalqualität in den mehreren Subbändern entsprechen.

## Revendications

1. Procédé d'émission d'informations de commande de liaison montante dans un système à entrées multiples et sorties multiples, MIMO (« Multiple-Input Multiple Output »), le procédé comprenant :
émettre M canaux d'information de qualité de canal, CQI, chacun incluant une CQI ;
dans lequel des informations de feedback additionnelles sont incluses dans au moins un bit poinçonné dans une pluralité de bits alloués pour les M canaux de CQI,
dans lequel :
chacun des M canaux de CQI est associé à une qualité de canal d'au moins une sous-bande sélectionnée,
le procédé étant **caractérisé en ce que** :
les M canaux de CQI sont émis pour M meilleures sous-bandes dans une pluralité de sous-bandes qui sont comprises dans une bande large.

2. Procédé selon la revendication 1, dans lequel : les informations de feedback additionnelles incluent au moins une parmi une information de matrice de précodage, PMI, une indication de rang, RI, et une indication de mode, MI.

3. Procédé selon la revendication 1, dans lequel : l'au moins un bit poinçonné inclut un bit de poids faible, LSB (« Least Significant Bit »), de la pluralité de bits.

4. Procédé selon la revendication 1, dans lequel : l'au moins une CQI inclut au moins une parmi une CQI totale et une CQI différentielle.

5. Procédé selon la revendication 4, dans lequel : si au moins deux mots de code sont émis, la CQI totale est associée à un premier mot de code et la CQI différentielle est associée à un deuxième mot de code.

6. Procédé selon la revendication 1, dans lequel les M meilleures sous-bandes correspondent à M sous-bandes ayant une meilleure qualité de canal dans la pluralité de sous-bandes.
